# Europäisches Patentamt

## European Patent Office

## Office européen des brevets

(11) Veröffentlichungsnummer: **0 025 534**
**B1**

(12) # EUROPÄISCHE PATENTSCHRIFT

(45) Veröffentlichungstag der Patentschrift:
04.12.85

(51) Int. Cl.⁴: **G 11 B 15/58**

(21) Anmeldenummer: **80105136.8**

(22) Anmeldetag: **28.08.80**

(54) Magnetbandgerät mit einer Schaltungsanordnung zum Dämpfen der Bewegung der Wickelmotoren bei Stillstand der Bandantriebsrolle.

(30) Priorität: **12.09.79 DE 2936937**

(43) Veröffentlichungstag der Anmeldung:
**25.03.81 Patentblatt 81/12**

(45) Bekanntmachung des Hinweises auf die Patenterteilung:
**04.12.85 Patentblatt 85/49**

(84) Benannte Vertragsstaaten:
**AT BE CH FR GB IT LI LU NL SE**

(56) Entgegenhaltungen:
**DE - A - 2 124 922**
**DE - B - 1 281 704**
**FR - A - 2 069 161**
**US - A - 3 958 777**

**IBM TECHNICAL DISCLOSURE BULLETIN, Band 14, Nr. 7, Dezember 1971 New York US FRAUENFELDER: "Magnetic tape unit reel motor servomechanism", Seiten 1947, 1948**

(73) Patentinhaber: **Siemens Aktiengesellschaft, Berlin und München Wittelsbacherplatz 2, D-8000 München 2 (DE)**

(72) Erfinder: **Meyer, Franz Josef, Ing.grad., Nordendstrasse 81, D-8080 Emmering (DE)**

# Beschreibung

Die Erfindung bezieht sich auf ein Magnetbandgerät mit einer Schaltungsanordnung zum Dämpfen der Bewegung der Wickelmotoren beim Stillstand der Bandantriebsrolle, bei dem dem jeweiligen Wickelmotor ein Regelverstärker vorgeschaltet ist.

Bei den Antrieben der Wickel in Magnetbandgeräten hat sich die Regelung der Wickelmotoren über den Motorstrom und nicht über die Motorspannung allgemein durchgesetzt, weil dadurch das dem Motorstrom proportionale Drehmoment immer unter Kontrolle ist. Bei der Regelung über die Motorspannung könnte der Strom und damit auch das Drehmoment für Motor und Wickel schädlich hoch werden, wenn die an den Motor angelegte Spannung in der gleichen Richtung wirkt wie die EMK des Motors.

Die Stromregelung für die Wickelmotoren hat aber den Nachteil, daß bei Stillstand der Antriebsrolle (capstan) die Bandwickel nicht ruhig stehen. Dies führt zu unnötigem Verschleiß an allen Reibstellen des Bandes in den in solchen Geräten in der Regel vorhandenen Pufferkammern und an den Bandumlenkstellen. Die Unruhe der Bandwickel ist auf folgende Ursachen zurückzuführen:

Befindet sich die Bandschlaufe des Magnetbandes exakt in der Mitte der Pufferkammer, dann wird der Strom im zugehörigen Wickelmotor von der Regelung auf den Wert Null heruntergeregelt. Der unterhalb der Bandschlaufe in der Pufferkammer herrschende Unterdruck zieht die Bandschlaufe aber in Richtung Kammerboden. Durch die unvermeidbare Hysterese der Schlaufenstellungssensoren bedingt, wird dieses Auswandern der Bandschlaufe aus der Mitte der Pufferkammer erst nach Zurücklegen eines gewissen Weges erkannt. Die Regelung versucht daraufhin die Stellung der Bandschlaufe wieder derart zu korrigieren, daß sich die Bandschlaufe in der Mitte der Pufferkammer befindet. Ist die Bandschlaufe dann wieder in der Pufferkammermitte angelangt, wird der Motorstrom wieder auf Null heruntergeregelt. Infolge der Massenträgheit des Wickels, des Wickelmotors und der Wickelaufnahme bewegt sich aber der Wickel und damit auch die Bandschlaufe in der Pufferkammer wieder aus der Mitte weg. Erst wenn der nächstliegende Sensor in der Pufferkammer überschritten oder der Wickel durch den Bandzug abgebremst wird, fließt wieder ein Strom durch den Wickelmotor, der die Schlaufe wieder auf die Mitte der Pufferkammer zu bewegt. Innerhalb des Hysteresebereiches ist der Motor völlig ungedämpft und bewegt sich somit ständig.

Aus der DE-B 1 281 704 ist eine Schaltungsanordnung bekannt, bei der bei der Bewegung eines Tonbands in einem Tonbandgerät der Antriebsmotor für die Bandantriebsrolle über den in ihm fließenden Motorstrom geregelt wird und bei der zum schnellen Abbremsen des Tonbands der Antriebsmotor kurzgeschlossen wird. Für ein Magnetbandgerät, das zusätzlich zu dem Antriebsmotor für die Bandantriebsrolle Wickelmotoren für die Wickel des Magnetbands enthält, ist diese bekannte Schaltungsanordnung nicht vorgesehen.

Der Erfindung lag daher die Aufgabe zugrunde, ein Magnetbandgerät mit einer Schaltungsanordnung zum Dämpfen der Bewegung der Wickelmotoren beim Stillstand der Bandantriebsrolle zu schaffen.

Diese Aufgabe wird erfindungsgemäß bei dem Magnetbandgerät der eingangs genannten Art durch die im kennzeichnenden Teil des Patentanspruchs 1 angegebenen Merkmale gelöst.

Die Erfindung geht dabei von der Erkenntnis aus, daß bei einer Spannungsregelung, bei der nicht der Strom sondern die Spannung von den Sensoren in der Pufferkammer geregelt wird, bei Stellung der Bandschlaufe in der Mitte in der Pufferkammer die an dem zugehörigen Wickelmotor liegende Spannung Null, d. h. der Motor kurzgeschlossen ist. Ein solcher Kurzschluß bewirkt aber eine Dämpfung der Bewegung des Motors innerhalb des Hysteresebereiches der Schlaufensensoren in der Pufferkammer.

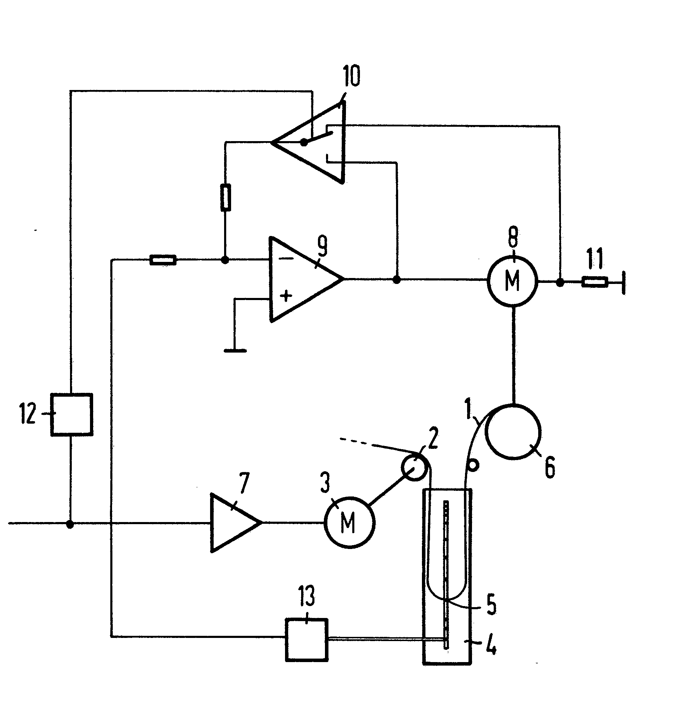

Die Zeichnung zeigt schematisch einen Teil eines Magnetbandgerätes, bei dem in an sich bekannter Weise ein Magnetband 1 mit Hilfe einer Antriebsrolle 2, die von einem Motor 3 abgetrieben ist, von einem Bandwickel 6 durch eine Pufferkammer 4 angetrieben wird. In der Pufferkammer 4 bildet das Band eine Bandschlaufe 5. Der Antriebsrollenmotor 3 wird in bekannter Weise über einen Regelverstärker 7 angesteuert. In ebenfalls bekannter Weise wird der Bandwickel 6 von einem Motor 8 angetrieben, der von einem Regelverstärker 9 angesteuert wird. Bei den Wickelantrieben in Magnetbandgeräten hat sich die Regelung der Wickelmotoren über deren Motorstrom durchgesetzt, was bei der dargestellten Einrichtung dadurch geschieht, daß der am Widerstand 11 auftretende, dem Motorstrom proportionale Spannungsabfall dem Regelverstärker als Eingangsgröße zugeführt wird. Wie oben erläutert, hat aber diese Art der Regelung für den Wickelmotor 8 den Nachteil, daß bei Stillstand der Antriebsrolle 2 der Bandwickel 6 nicht ruhig steht. Erfindungsgemäß werden deshalb die Wickelmotoren während des normalen Bandlaufes über den in ihnen fließenden Motorstrom und während des Stillstandes der Bandantriebsrolle 2 über die an ihnen liegende Spannung geregelt. Bei dem Ausführungsbeispiel geschieht dies dadurch, daß ein elektronischer Schalter 10 vorgesehen ist, der während des normalen Bandlaufes dem Regelverstärker 9 für den Wickelmotor 8 als Eingangsgröße die am Widerstand 11 abfallende, dem Motorstrom proportionale Spannung, während des Stillstandes dagegen, nach Umschaltung, die am Verbindungspunkt zwischen Ausgang des Regelverstärkers 9 und Eingang des Motors 8 liegende Spannung zuführt.

Als besonders vorteilhaft hat es sich erwiesen, den elektronischen Schalter 10 nicht sofort beim Stillstand der Bandantriebsrolle 2 umzuschalten, sondern erst nach einer gewissen Verzögerungszeit, in der die Bandschlaufe 5 in der Lage ist, ihre Position in der Mitte der Pufferkammer 4 einzunehmen. Zu diesem Zweck ist zwischen dem Eingang des Regelverstärkers 7 und dem elektronischen Schalter 10 ein Verzögerungsglied 12 eingeschaltet, welches den elektronischen Schalter erst nach einer bestimmten Verzögerungszeit umschaltet.

Die Pufferkammer wurde in dem gezeigten Ausführungsbeispiel nur schematisch angedeutet, und insbesondere wurde angedeutet, daß die Stellung der Bandschlaufe 5 innerhalb der Pufferkammer 4 mit Hilfe von in der Kammerrückwand befindlichen Öffnungen und eines Druckwandlers 13 in an sich bekannter Weise festgestellt wird. Statt dessen kann selbstverständlich auch eine Abtastung der Schlaufenposition mit Hilfe optischer Elemente erfolgen, und darüberhinaus ist die Erfindung auch bei rein analoger Bandschlaufenabtastung vorteilhaft, wenn diese, was in der Regel der Fall ist, eine gewisse Hysterese aufweist.

## Patentansprüche

1. Magnetbandgerät mit einer Schaltungsanordnung zum Dämpfen der Bewegung der Wickelmotoren beim Stillstand der Bandantriebsrolle, bei dem dem jeweiligen Wickelmotor ein Regelverstärker vorgeschaltet ist, gekennzeichnet durch einen Umschalter (10), der dem Regelverstärker (9) während des normalen Bandlaufs als Regelgröße eine dem Motorstrom proportionale Größe und während des Stillstands der Bandantriebsrolle (2) eine der dann an dem Wickelmotor (8) liegenden Spannung proportionale Größe zuführt.

2. Magnetbandgerät nach Anspruch 1, gekennzeichnet durch einen vorzugsweise elektronischen Umschalter (10), der während des normalen Bandlaufes den Verbindungspunkt zwischen einem mit dem Wickelmotor (8) in Reihe liegenden Widerstand und dem Wickelmotor (8) selbst und während des Stillstandes der Bandantriebsrolle (2) den Verbindungspunkt zwischen Wickelmotor (8) und Ausgang des Regelverstärkers (9) für den Wickelmotor (8) mit dem Eingang des Regelverstärkers (9) verbindet.

3. Magnetbandgerät nach Anspruch 2, gekennzeichnet durch ein zwischen den Eingang eines weiteren Regelverstärkers (7) für einen Bandantriebsrollenmotor (3) und den elektronischen Umschalter (10) geschaltetes Verzögerungsglied (12).

4. Magnetbandgerät nach Anspruch 2, dadurch gekennzeichnet, daß das Verzögerungsglied (12) eine Verzögerungszeit von einigen Sekunden, vorzugsweise 1,5 Sek. hat.

## Claims

1. Magnetic tape apparatus with a switching arrangement for damping the movement of the reel motors during standstill of the tape transport capstan, wherein a control amplifier is connected before the respective reel motor, characterised by a change-over switch (10) which during the normal tape run, feeds a magnitude proportional to the motor current as a control magnitude to the control amplifier (9) and which during standstill of the tape transport capstan (2), feeds a magnitude proportional to the voltage connected to the reel motor (3) to the control amplifier (9).

2. A magnetic tape apparatus as claimed in Claim 1, characterised by a preferably electronic, change-over switch (10) which during the normal tape run connects the connection point between a resistor, which is arranged in series with the reel motor (8) and the reel motor (8) itself, to the input of the control amplifier (9) and which during standstill of the tape transport capstan (2), connects the connection point between the reel motor (8) and the output of the control amplifier (9) for the reel motor (8) to the input of the control amplifier (9).

3. A magnetic tape apparatus as claimed in Claim 2, characterised by a delay member (12) which is inserted between the input of a further control amplifier (7) for a tape transport capstan motor (3) and the electronic change-over switch (10).

4. A magnetic tape apparatus as claimed in Claim 2, characterised in that the delay member (12) has a delay time of several seconds, preferably 1,5 seconds.

## Revendications

1. Appareil à bande magnétique, comportant un circuit pour amortir le mouvement des moteurs d'enroulement à l'arrêt du rouleau d'entraînement de la bande, dans lequel un amplificateur de régulation est monté en amont du monteur d'enroulement concerné, caractérisé par un commutateur (10) qui applique à l'amplificateur de régulation (9), pendant le déplacement normal de la bande, et en tant que grandeur de régulation, une grandeur proportionnelle au courant du moteur, et, pendant l'arrêt du rouleau d'entraînement de la bande (2), une grandeur qui est proportionnelle à la tension alors appliquée au moteur d'enroulement (3).

2. Appareil à bande magnétique selon la revendication 1, caractérisé par un commutateur (10), de préférence électronique, qui, pendant le déplacement normal de la bande, relie le point de liaison entre une résistance montée en série avec le moteur d'enroulement (8) et le moteur d'enroulement (8) lui-même, à l'amplificateur de régulation (9), et que, pendant l'arrêt du rouleau d'entraînement de la bande (2), relie à cet amplificateur (9) pour le moteur d'enroulement (8), le point de liaison entre le moteur d'enroulement (8) et la sortie de l'amplificateur de régulation (9) pour le moteur d'enroulement (8).

3. Appareil à bande magnétique selon la revendication 2, caractérisé par un dispositif à retard (12) monté entre l'entrée d'un second amplificateur de régulation (7) pour un moteur (3) du rouleau d'entraînement de la bande et le commutateur électronique (10).

4. Appareil à bande magnétique selon la revendication 2, caractérisé par le fait que le dispositif à retard (12) possède une durée de retard de quelques secondes, de préférence de 1,5 seconde.